# EUROPEAN PATENT APPLICATION

(11) **EP 2 346 219 A1**
(43) Date of publication of application: **20.07.2011**
(21) Application number: 08877371.8
(22) Date of filing: 25.12.2008
(51) Int. Cl.: H04L 12/56

(54) **METHOD FOR PROCESSING THE BEARING REESTABLISHMENT FAILURE**

(30) Priority: 14.10.2008 CN 200810166653
(71) Applicant: ZTE Corporation, Shenzhen, Guangdong 518057 (CN)
(72) Inventor: YE, Minya, Shenzhen Guangdong 518057 (CN); DING, Yanjing, Shenzhen Guangdong 518057 (CN); LIU, Xiliang, Shenzhen Guangdong 518057 (CN)
(74) Representative: Lampis, Marco
(86) International application number: PCT/CN2008/073713
(87) International publication number: WO 2010/043094

(57) **Abstract**

A method for processing bearer reestablishment failure is disclosed in the present invention for preventing a SGW from doing error processing due to the bearer reestablishment failure in a SAE network. The method comprises the following steps: a mobility management entity (MME) sending a notification message to a service gateway (SGW) after reestablishment of a bearer, the notification message carrying effectiveness parameters indicating the effectiveness state of the bearer, and the SGW storing the effectiveness parameters; the SGW not delivering data packets if the effectiveness state of the bearer is failure when me SGW is to deliver data packets.

## Description

### Technical Field

The present invention relates to evolution of a packet-switched domain of a mobile communication system, in particular, to a method for processing bearer reestablishment failure.

### Background Art

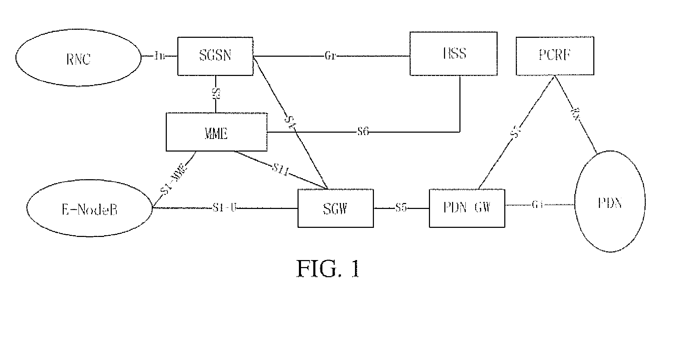

The project of the next-generation mobile radio network in 3GPP (3rd Generation Partnership Project) is called as System Architecture Evolution (SAE). The architecture of SAE is as shown in FIG. 1, wherein it comprises the following network elements:
E-RAN (Evolved RAN): an evolved radio access network, which can provide higher uplink and downlink speed, lower transmission delay and more reliable radio transmission. The network element included in E-RAN is eNodeB (Evolved NodeB) which provides radio resources for access of a terminal.
HSS (Home Subscriber Server): a home subscriber server, which permanently stores subscriber subscription data.
PDN (Packet Data Network): a packet data network, which is a network for providing services for the subscriber.
E-Packet Core: an evolved packet network, which provides even lower delay and allows access of more radio access systems, comprising the following network elements:
MME (Mobility Management Entity): a control-plane functional entity, which is a server for temporarily storing a subscriber's data, and is responsible for managing and storing UE context (for example, UE/user identifier, mobility management status, subscriber security parameters, etc.), distributing temporary identifiers for the subscriber, and performing authentication on the subscriber when the UE resides in the tracking region or in the network; processing all non-access layer messages between a MME and a UE; triggering a paging at SAE.
Serving GW (Gateway): a serving gateway, which is a subscriber-plane entity responsible for subscriber-plane data routing processing, and terminating downlink data of a UE which are in idle state, managing and storing SAE bearer context of a UE, i.e., IP bearer service parameters and internal routing information of the network, etc.; it is an anchor of the subscriber plane inside a 3GPP system, and one subscriber can only have one Serving GW at one moment.
PDN GW: a packet data network gateway, which is a gateway responsible for access of a UE into a PDN, distributing an IP address for a subscriber, and meanwhile is a mobility anchor for a 3GPP and a non-3GPP access system. A subscriber can access a plurality of PDN GWs at one moment.
PCRF (Policy and Charging Rule Functionality): a policy and charging rule functional entity, which is mainly used to generate QoS (Quality of Service) rules and charging rules for controlling transmission of subscriber data according to service information and subscriber subscription information as well as configuration information of the operator. The entity can also control establishment and release of a bearer in an access network.
RNC (Radio Network Controller): a radio network controller, which is mainly responsible for controlling use of radio resources.
SGSN (Serving GPRS Support Node): a serving GPRS support node, whose main functions include mobility management of 2G/3G and 3GPP access networks, selecting PDN and Serving GW for a MME, etc.

Physically, Serving GW and PDN GW may be integrated into one.

A SAE bearer refers to a channel from a terminal to a PGW(short for PND GW), and a UE and a PDN can use this channel to transmit uplink and downlink data of particular QoS. Once a SAE bearer has been established, the related information of the bearer will be stored in each network element between the UE and PDN, including UE, eNodeB, MME, SGW and PGW, and when the related information of the bearer has changed, the related network elements are informed so as to keep the related information of the bearer on each network element consistent.

There may be some situations after establishment of the bearer that will cause bearer reestablishment.

One of the situations that causes bearer reestablishment is when the subscriber changes from being in idle state to being in connected state. In idle state, there is no signaling connection between the UE and network, and there is no related information of the UE including bearer information of the UE in the eNodeB. The eNodeB information in the subscriber information of MME and SGW, including eNodeB address and eNodeB downlink tunnel identifier, will be cleared. While in connected state, there is a signaling connection between the UE and the network. There is related information of the UE in eNodeB, and the bearer information of the UE is also included. The related information of eNodeB is stored in the subscriber bearer information of the MME and SGW stores, including eNodeB address and eNodeB downlink tunnel identifier. When the subscriber changes from being in idle state to being in connected state, subscriber-related information needs to be reestablished in the eNodeB, and the related information of the eNodeB will be updated to the MME and SGW.

Another situation that causes bearer reestablishment is when the subscriber has inter-eNodeB or trans-system location change. The possible flow includes switch processes in various cases, including: the flow occurs intra-MME, inter-MME, SGW has changed, SGW does not change, LTE access and inter-system switch of a 2/3G network based on S3, S4 port, etc. In this case, since the network elements at the radio side have changed, the bearer related with the old network elements at the radio side are deleted, and a bearer is reestablished at new network elements of the radio side; correspondingly, related information of the new radio bearer, including new address and downlink tunnel identifier at the radio side, should also be added or updated in the MME and SGW.

Not all of the situations for establishing bearers for a subscriber during the above process of bearer reestablishment are the same, some of the bearers are successfully reestablished but some of them are not. The present scheme is that no matter the bearer reestablishment is successful or not, the MME informs the SGW to update all bearers, and after the current flow ends, the MME initiates a release flow directed to the bearer that fails in reestablishment.

However, this scheme has the following problem: since the SGW has updated all of the bearers, then these bearers are all valid in view of the SGW. If the SGW receives downlink data packets or buffers downlink data previously for the bearer that fails in reestablishment before the MME initiates a release flow directed to the bearer that fails in reestablishment, then the SGW will use these bearers that fail in establishment to send down data. Moreover, since these bearers fail in establishment and the new downlink tunnel identifier at the radio side cannot be acquired, the downlink tunnel identifier at the radio side stored in the SGW is either an error or failure value, or an invalid value. If it is an error or invalid value, the SGW will deliver data packets to an erroneous downlink tunnel, leading to the result that the data that should have been abandoned in SGW are delivered by mistake, which increases the data load on the interface with the radio side and meanwhile may cause chaos due to erroneous data delivery. If the downlink tunnel identifier at the radio side is an invalid value, the SGW will firstly trigger a paging flow caused by downlink data when data need to be delivered on these bearers, leading to the result that the data which should have been abandoned at the SGW trigger a paging flow, which directly causes chaos of the flow.

As can be seen, when bearer reestablishment in a SAE network fails, an error processing may be performed since the SGW does not know the real situation of the bearer reestablishment.

### Summary of the Invention

The technical problem to be solved in the present invention is to provide a method for processing bearer reestablishment failure so as to prevent a SGW from doing error processing due to failure of bearer reestablishment in a SAE network.

In order to solve the above technical problem, the present invention provides a method for processing bearer reestablishment failure, comprising:
a mobility management entity (MME) sending a notification message to a service gateway (SGW) after reestablishment of a bearer, the notification message carrying effectiveness parameters indicating an effectiveness state of the bearer, and the SGW storing the effectiveness parameters; and
the SGW not delivering data packets if the effectiveness state of the bearer is failure when the SGW is to deliver data packets.

Furthermore, the SGW only delivers data packets on valid bearers.

Furthermore, the notification message sent by the MME to the SGW is a bearer update request, a subscriber-plane update request or a bearer establishment request.

Furthermore, the effectiveness parameters sent by the MME to the SGW are a bearer list of failure bearers.

Furthermore, the SGW updates bearer information and retains the bearer list of the failure bearer after receiving the bearer list.

Furthermore, the effectiveness parameters sent by the MME to the SGW are effectiveness identifiers in specific information of each bearer that needs to be updated.

Furthermore, the SGW marks in bearer information of each failure bearer that the bearer is failure.

Furthermore, said SGW being to deliver data packets means that the SGW has buffered data locally or receives a downlink data notification.

Furthermore, said after reestablishment of a bearer means: after reestablishment of a bearer in a process of service request, or after reestablishment of a bearer in a process of switching between a source evolved node B (eNodeB) and a target evolved node B (eNodeB), or after reestablishment of a bearer in a process of switching between 3GPP network elements caused by change of UE location.

Furthermore, when the effectiveness state of the bearer is failure, the SGW executes one or more of the following operations: terminating a flow, abandoning a response message, abandoning data, returning failure.

By using the method of the present invention, a MME informs a SGW of bearer information that needs to be deleted subsequently due to reestablishment failure in the process of bearer update through a message of bearer failure so that the SGW can correctly identify the corresponding state of the bearer when the bearer reestablishment fails, thus avoiding performing error processing.

### Brief Description of Drawings

FIG. 1 illustrates SAE architecture in the prior art;
FIG. 2 illustrates the flow according to Example One of the present invention;
FIG. 3 illustrates the flow according to Example Two of the present invention;
FIG. 4 illustrates the flow according to Example Three of the present invention;
FIG. 5 illustrates the flow according to Example Four of the present invention.

### Preferred Embodiments of the Invention

The creative idea of the present invention is that a MME sends a notification message, which carries effectiveness parameters indicating the effectiveness state of the bearer, to a SGW after a bearer is reestablished to inform the SGW of effectiveness state of each bearer(e.g., which bearers are failure), and the SGW stores the effectiveness parameters after receiving the parameters; the SGW judges whether the bearer is failure or not according to the effectiveness state of the bearer when delivering data packets, and it does not try to deliver data if the bearer is failure. The SGW can correctly identify the corresponding state of the bearer when the bearer reestablishment fails, thus avoiding performing error processing.

The above processing can be construed as a separate processing flow after bearer reestablishment is completed, or can be considered as a part of the process of bearer reestablishment, neither of which will affect implementation of the technical scheme.

The notification message sent by the MME to the SGW may be a bearer update request, a subscriber-plane update request or a bearer establishment request. A MME can mark which bearers have already failed by carrying a bearer list of failure bearers in the message or by adding an effectiveness identifier, e.g., a failure identifier, in the specific information of each bearer that needs to be updated carried in the message. In other examples, a valid identifier can also be added in the specific information of the bearer that needs to be updated so that the SGW can know which bearers have already failed indirectly. The SGW can select to store the failure marks subsequently in the corresponding bearer information, and judge whether the bearer has failed or not when doing operations on the bearer (e.g., delivery of downlink data, etc.). If the bearer has failed, the SGW does not try to deliver the data, i.e., does not deliver the data, and conducts a special processing according to the specific situation, for example, executing one or more of the following operations: terminating the corresponding flow, abandoning a response message, abandoning data, returning failure. In other words, the SGW only delivers data packets on valid bearers.

If a bearer list is carried, then the bearer list is the effectiveness parameter; if an effectiveness identifier is carried, then the effectiveness identifier is the effectiveness parameter.

The present invention will be described in detail below with reference to the drawings and the specific examples.

### Example One

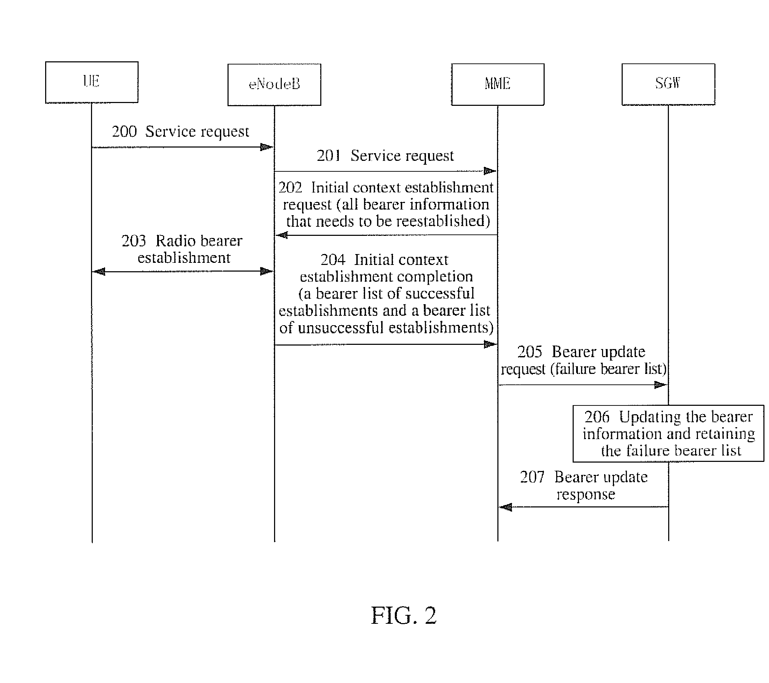

As shown in FIG. 2, this example illustrates the process of service request, comprising:
Step 200, a UE sending a service request message to an eNodeB when it needs to transmit signaling or data;
Step 201, the eNodeB sending the service request message to a MME;
Step 202, the MME sending an initial context request to the eNodeB, wherein the request carries bearer list information that needs to be established;
Step 203, establishing a radio bearer between the eNodeB and the UE;
Step 204, the eNode returning an initial context establishment response message to the MME after the bearer establishment is completed, wherein the message carries both bearer list information of successful establishments and bearer list information of unsuccessful establishments;
Step 205, the MME sending a bearer update request to the SGW to update all bearer information in the SGW, wherein the bearer update request carries a bearer list of bearers that fails due to unsuccessful bearer establishment, or an effectiveness identifier is added in the specific information of each bearer that needs to be updated carried in the message, the effectiveness identifier may be only carried in the bearer information of a failure bear to indicate which bearers have failed, or may be only carried in the bearer information of a valid bear, or may be carried in each corresponding bearer;
Step 206, the SGW updating the bearer information and retaining the failure bearer list information, or marking in the bearer information of each failure bearer that the bearer is failed (i.e., storing locally which bearers are failed);
Step 207, the SGW returning a bearer update response message;

If the SGW has buffered data locally or receives a downlink data notification and the like, it firstly judges whether a bearer is failed or not when delivering each data packet, and it does not try to deliver the data if the bearer is failed.

### Example Two

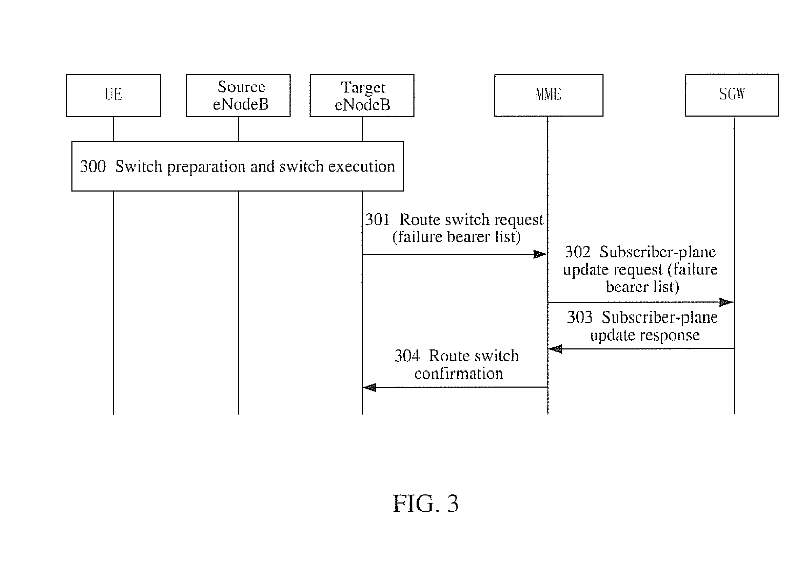

As shown in FIG. 3, this example illustrates the process of switching between eNodeBs when a MME and a SGW do not change, comprising the following steps:
Step 300, when a UE switches from a source eNodeB to a target eNodeB due to location change and the like, the UE performing switch preparation and switch execution with the source eNodeB and the target eNodeB (bearer reestablishment will be carried out during the switching process);
Step 301, the target eNodeB sending a route switch request message to a MME, wherein the message carries a bearer list of reestablishment failure;
Step 302, if the MME judges that the SGW does not need to changes, the MME sending a subscriber-plane update request to the SGW to update all the bearer information in the SGW, wherein the request carries a bearer list that fails due to bearer establishment failure;
Step 303, the SGW updating the bearer information, retaining the failure bearer list information, and returning a bearer update response message to the MME;
Step 304, the MME returning a route switch confirmation message to the target eNodeB;

If the SGW has buffered data locally or receives a downlink data notification and the like, it firstly judges whether a bearer is failed or not, and it does not try to deliver the data if the bearer is failed.

### Example Three

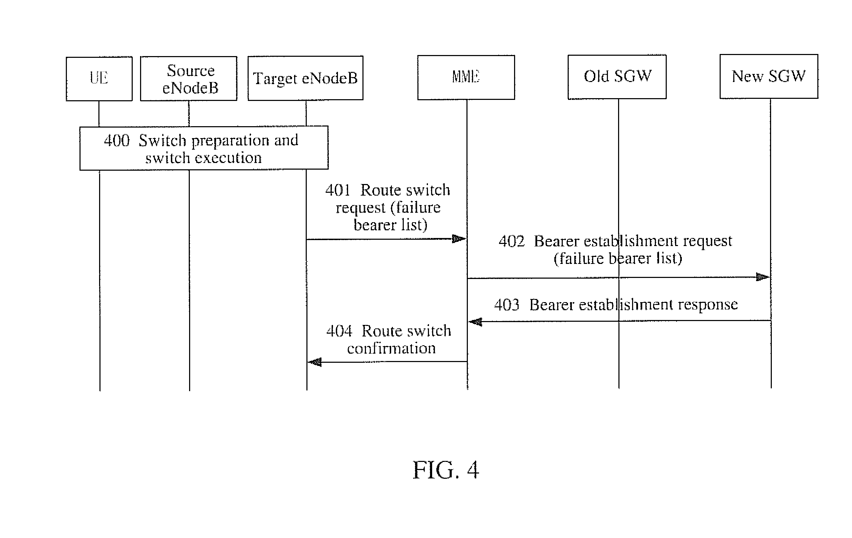

As shown in FIG. 4, this example illustrates the process of switching between eNodeBs when a MME does not change but a SGW does, comprising the following steps:
Step 400, when a UE switches from a source eNodeB to a target eNodeB due to location change and the like, the UE performing switch preparation and switch execution with the source eNodeB and the target eNodeB (bearer reestablishment will be carried out during the switching process);
Step 401, the target eNodeB sending a route switch request message to a MME, wherein the message carries a bearer list of reestablishment failure;
Step 402, if the MME judges that the SGW needs to change, the MME selecting a new SGW according to the selection function of the SGW, sending a bearer establishment request message to the new SGW, and establishing all of the bearer information in the new SGW, wherein the message carries a bearer list that fails due to bearer establishment failure;
Step 403, the new SGW establishing the bearer information, retaining the failure bearer list information, and returning a bearer establishment response message to the MME;
Step 404, the MME returning a route switch confirmation message to the target eNodeB;

If the new SGW has buffered data locally or receives a downlink data notification and the like, it firstly judges whether a bearer is failed or not, and it does not try to deliver the data if the bearer is failed.

### Example Four

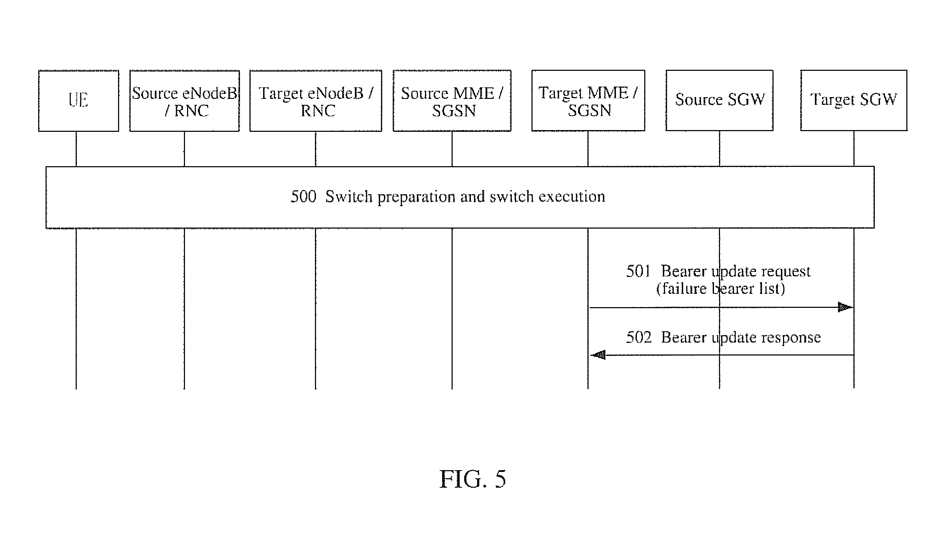

As shown in FIG. 5, this example illustrates a process of switching within 3GPP when a MME/SGSN changes and a SGW also changes, comprising the following steps:
Step 500, when a UE switches trans-MME, trans-SGSN or trans-MME and SGSN due to location change and the like, each network element involved performing switch preparation and switch execution with each other (bearer reestablishment will be carried out during the switching process);
Step 501, when a bearer is reestablished at the radio side, after the UE switches to a target MME, the MME sending a bearer update request to a new SGW, and updating all of the bearer information in the new SGW, wherein the request carries a bearer list that fails due to bearer establishment failure;
Step 502, the new SGW updating the bearer information, retaining the failure bearer list information, and returning a bearer update response message to the MME;

If the new SGW has buffered data locally or receives a downlink data notification and the like, it firstly judges whether a bearer is failed or not, and it does not try to deliver the data if the bearer is failed.

As it should be, the present invention may also have many other examples, and a person skill in the art can make various corresponding modifications and transformations without departing from the spirit and essence of the present invention, but all of these corresponding modifications and transformations should fall within the protection scope of the claims attached thereto.

### Industrial Applicability

By using the method of the present invention, a MME informs a SGW of bearer information that needs to be deleted subsequently due to reestablishment failure in the process of bearer update through a message of bearer failure so that the SGW can correctly identify the corresponding state of the bearer when the bearer reestablishment fails, thus avoiding performing error processing.

## Claims

1. A method for processing bearer reestablishment failure, comprising:
a mobility management entity (MME) sending a notification message to a service gateway (SGW) after reestablishment of a bearer, the notification message carrying effectiveness parameters indicating an effectiveness state of the bearer, and the SGW storing the effectiveness parameters; and
the SGW not delivering data packets if the effectiveness state of the bearer is failure when the SGW is to deliver data packets.

2. The method according to claim 1, wherein,
the SGW only delivers data packets on valid bearers.

3. The method according to claim 1, wherein,
the notification message sent by the MME to the SGW is a bearer update request, a subscriber-plane update request or a bearer establishment request.

4. The method according to claim 1, 2 or 3, wherein,
the effectiveness parameters sent by the MME to the SGW are a bearer list of failure bearers.

5. The method according to claim 4, further comprising:
the SGW updating bearer information and retaining the bearer list of the failure bearers after receiving the bearer list.

6. The method according to claim 1, 2 or 3, wherein,
the effectiveness parameters sent by the MME to the SGW are effectiveness identifiers in specific information of each bearer that needs to be updated.

7. The method according to claim 6, further comprising:
the SGW marks in bearer information of each failure bearer that the bearer is failure.

8. The method according to claim 1 or 2, wherein,
said SGW being to deliver data packets means that the SGW has buffered data locally or receives a downlink data notification.

9. The method according to claim 1 or 2, wherein,
said after reestablishment of a bearer means: after reestablishment of a bearer in a process of service request, or after reestablishment of a bearer in a process of switching between a source evolved node B (eNodeB) and a target evolved node B (eNodeB), or after reestablishment of a bearer in a process of switching between 3GPP network elements caused by change of UE location.

10. The method according to claim 1, wherein,
when the effectiveness state of the bearer is failure, the SGW executes one or more of the following operations: terminating a flow, abandoning a response message, abandoning data, returning failure.
